# EUROPEAN PATENT APPLICATION

(11) **EP 3 425 994 A1**
(43) Date of publication of application: **09.01.2019**
(21) Application number: 18181761.0
(22) Date of filing: 04.07.2018
(51) Int. Cl.: H04W 76/14, H04W 8/00, H04W 12/08, H04W 4/70

(54) **DEVICE-PAIRING METHOD AND SYSTEM THEREFOR**

(30) Priority: 04.07.2017 CN 201710539476
(71) Applicant: Shanghai Xiaoyi Technology Co., Ltd., Pudong New Area Shanghai 201203 (CN)
(72) Inventor: ZONG, Liang, Shanghai, 201203 (CN)
(74) Representative: Finnegan Europe LLP

(57) **Abstract**

Methods and apparatuses for pairing a terminal (120) with a device (110) are disclosed. According to certain embodiments, the methods may be performed by the terminal. The method may include obtaining a machine-readable code from the device. The methods may also include determining, based on the code, one or more pairing methods for pairing the terminal with the device. The methods may further include performing at least one of the pairing methods.

## Description

### TECHNICAL FIELD

The present disclosure relates generally to the field of communication technologies, and more particularly, to a device-pairing method and system.

### BACKGROUND

Increasing proliferation of electronic devices, such as mobile phones, cameras, wearable devices, smart home appliances, media players, personal digital assistants (PDAs), continuously opens up new services and possibilities for users. These devices may be connected to form an Internet of Things (loT) that allows data (e.g., multimedia data, configuration files, control signals, documents, etc.) to be exchanged among the devices. Before two devices communicate, they need to perform one or more "pairing" operations to link the devices and form a secure channel for transferring the data. However, such pairing process may be time consuming and cumbersome for the users.

One reason for such difficulty is that the loT is a hodgepodge comprising devices of different types and from different manufacturers. Even same-type devices made by a single manufacturer may differ by generation, model, version, etc. Such devices may have different hardware capacities and use different communication protocols. Therefore, one of the main challenges in device pairing is that, because of the diversity of devices and lack of standards, no universal pairing method exists. Without knowing each other's hardware/software configurations, unfamiliar devices have to perform the pairing through trial and error. The pairing thus has a low success rate.

For example, a user may need to pair a mobile phone with an Internet Protocol (IP) camera, in order to view the video captured by the camera on the phone. However, the mobile phone usually does not know which pairing method is applicable to the IP camera. Conventionally, the mobile phone may use a default pairing method for all IP cameras or may have to guess which pairing method is suitable for a particular IP camera. If the pairing method used by the mobile phone is incompatible with the IP camera, the pairing fails. Then the mobile phone has to try again or the user has to manually configure the pairing. This traditional way of pairing is error-prone, random, and rigid, and thus creates a poor user experience.

Another reason for the difficulty of pairing lies in the fact that many devices to be paired may have limited user interface capability. For example, the above-described IP camera may have no display or keyboard, and the user thus cannot directly input a pairing password in the IP camera. Alternatively, the user may have to supply input via a primitive interface, such as Light Emitting Diode (LED) lights or buttons, to communicate with the IP camera. This not only makes it difficult for the user to configure the IP camera for pairing with the mobile phone, but also prevents the IP camera from conveying information about the IP camera, such as the acceptable pairing method, to the user and/or the mobile phone. Therefore, a heavy burden is imposed on the mobile phone to search for and use the right pairing method.

The disclosed methods and systems address one or more of the problems listed above.

### SUMMARY

According to a first aspect of the present invention, there is provided a method for a terminal to communicate with a device, the method comprising: obtaining a machine-readable code from the device; determining, based on the code, one or more pairing methods for pairing the terminal with the device; and performing at least one of the pairing methods.

Conveniently, obtaining the code may comprise at least one of: scanning a graphic code displayed on the device, receiving an audio signal generated by the device; or receiving the code through near-field communication.

Advantageously, the graphic code may include a bar code, a quick response code, a three-dimensional code, and/or an augmented reality code

Conveniently, determining the pairing methods may comprise: decoding the machine-readable code; and obtaining a recommendation for one or more of the pairing methods.

Conveniently, determining the pairing methods may comprise: decoding the machine-readable code; obtaining identification information of the device, and selecting one or more of the pairing methods based on the identification information.

Advantageously, the identification information may include a serial number, a machine access control address, a model number, and/or a version number of the device.

Conveniently, selecting one or more of the pairing methods may comprise: querying a database to determine features of the device based on the identification information; and selecting one or more of the pairing methods based on compatibility with the device features.

Advantageously, selecting one or more of the pairing methods may comprise: transmitting the identification information to a server; and receiving, from the server, identification of one or more of the pairing methods based on compatibility with the device features and/or based on success rates of the pairing methods as applied to the device.

Conveniently, performing at least one of the pairing methods may comprise: presenting one or more of the pairing methods to a user of the terminal; receiving, from the user, a selection of a first pairing method; and in response to the user input, performing the first pairing method.

Conveniently, the pairing methods may include at least a first pairing and a second pairing method; and performing at least one of the pairing methods may comprise: performing the first pairing method; and after determining that the first pairing method has failed, performing the second pairing method.

According to a second aspect of the present invention, there is provided a terminal, comprising: a memory storing instructions; and a processor configured to execute the instructions to perform any of the methods described above with reference to the first aspect.

According to a third aspect of the present invention, there is provided a method performed by a server, the method comprising: receiving, from a terminal, a request to recommend a pairing method for pairing the terminal with a device, the request comprising identification information of the device; selecting, based on the identification information, a pairing method that is compatible with the device; and transmitting the selection, to the terminal, as a recommended pairing method.

Conveniently, selecting a pairing method may comprise: querying a database to determine features of the device based on the identification information; and selecting a pairing method that is compatible with the features of the device.

Advantageously, the server may store success rates of a plurality of pairing methods used on the device; and selecting the pairing method may comprise: selecting the pairing method based on the success rates.

According to a fourth aspect of the present invention, there is provided a method performed by a device carrying a machine-readable code, the method comprising: receiving from a terminal a command for pairing with the terminal, the command being based on the code and specifying a pairing method; and performing pairing steps according to the received method.

According to a fifth aspect of the present invention, there is provided a computer-readable storage medium storing instructions that: when executed by a processor of a terminal, cause the terminal to perform any of the method discussed above with reference to the first aspect; when executed by a processor of a server, cause the server to perform any of the methods discussed above with reference to the third aspect; or when executed by a processor of a device carrying a machine-readable code, cause the device to perform the method discussed above with reference to the fourth aspect.

According to a sixth aspect of the present invention, there is provided as system comprising: a device carrying a machine-readable code; and a terminal, comprising: a memory storing instructions; and a processor configured to execute the instructions to cause the terminal to perform any of the methods discussed above with reference to the first aspect.

Consistent with one embodiment of the present disclosure, there is provided a method for a terminal to communicate with a device. The method may include obtaining a machine-readable code from the device. The method may also include determining, based on the code, one or more pairing methods for pairing the terminal with the device. The method may further include performing at least one of the pairing methods.

Consistent with another embodiment of the present disclosure, there is provided a terminal including a memory and a processor. The memory may store instructions for pairing the terminal with a device. The processor may be configured to execute the instructions to obtain a machine-readable code from the device; determine, based on the code, one or more pairing methods for pairing the terminal with the device; and perform at least one of the pairing methods.

Consistent with another embodiment of the present disclosure, a non-transitory computer-readable storage medium storing instructions is provided. The instructions cause a processor of a terminal to perform a method for communicating with a device. The method may include obtaining a machine-readable code from the device. The method may also include determining, based on the code, one or more pairing methods for pairing the terminal with the device. The method may further include performing at least one of the pairing methods.

Consistent with another embodiment of the present disclosure, a method performed by a server is provided. The method may include receiving, from a terminal, a request to recommend a pairing method for pairing the terminal with a device, the request comprising identification information of the device. The method may also include selecting, based on the identification information, a pairing method that is compatible with the device. The method may further include transmitting the selected pairing method to the terminal.

Consistent with another embodiment of the present disclosure, a method performed by a device is provided. The device may carry a machine-readable code. The method may include receiving from a terminal a command for pairing with the terminal, the command being based on the code and specifying a pairing method. The method may also include performing pairing steps according to the received method.

Consistent with yet another embodiment of the present disclosure, a system including a device and a terminal is provided. The device may carry a machine-readable code. The terminal may include a memory and a processor. The memory may store instructions for pairing the terminal with a device. The processor may be configured to execute the instructions to obtain the code from the device; determine, based on the code, one or more pairing methods for pairing the terminal with the device; and perform at least one of the pairing methods.

It is to be understood that both the foregoing general description and the following detailed description are exemplary and explanatory only and are not restrictive of the invention, as claimed.

### DESCRIPTION OF DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram illustrating a system for pairing a terminal with a smart device, according to an exemplary embodiment.
Fig. 2 is a flowchart of a device-pairing method, according to an exemplary embodiment.
Fig. 3 is a schematic diagram illustrating an implementation of the method shown in Fig. 2, according to an exemplary embodiment.
Fig. 4 is a flowchart of a method for pairing a terminal with a smart device, according to an exemplary embodiment.
Fig. 5 is a flowchart of a method for pairing a terminal with a smart device, according to an exemplary embodiment.
Fig. 6 is a flowchart of a method for pairing a terminal with a smart device, according to an exemplary embodiment
Fig. 7 is a block diagram of a device for performing a device-pairing method, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

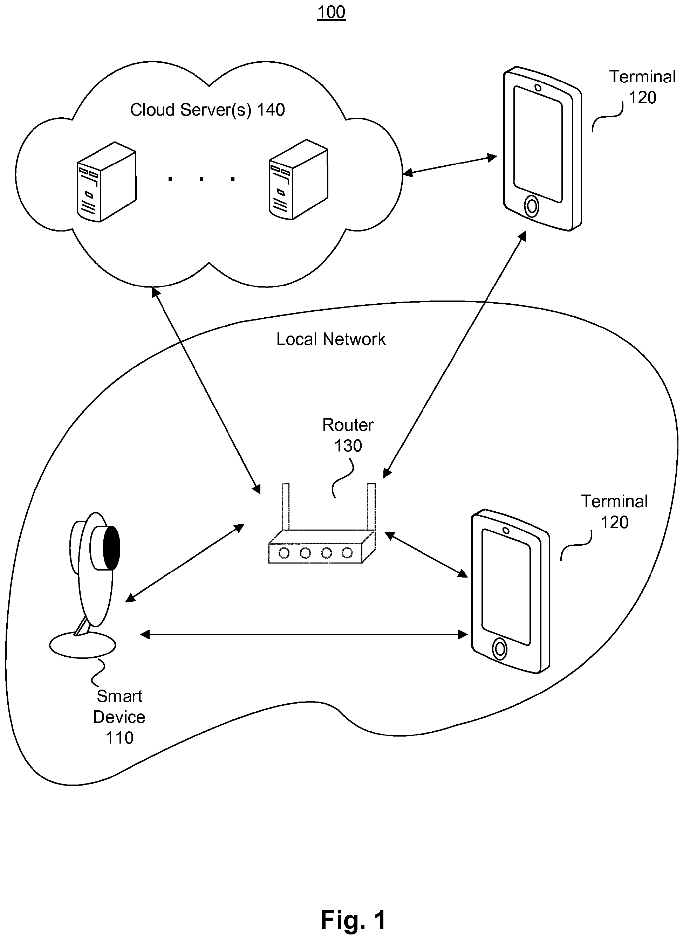

Fig. 1 is a schematic diagram illustrating a system for pairing a terminal with a smart device, according to an exemplary embodiment. Referring to Fig. 1, system 100 may include a smart device 110, a terminal 120, a router 130, and one or more cloud servers 140.

Smart device 110 may be a device with certain computing capabilities, such as a smart camera, a wearable device (e.g., a wrist band, a smart watch, a headset, etc.), an Unmanned Aerial Vehicle (UAV), a self-driving vehicle, a smart air conditioner, a smart air purifier, a smart refrigerator, a smart socket, a smart door bell, etc. Smart device 110 may be configured to form wireless or wired communications with other devices, including terminal 120, router 130, and cloud server 140. For example, smart device 110 may include a built-in Wi-Fi module for wireless connection. Also, for example, smart device 110 may include a Universal Serial Bus (USB) interface by which router 130 may be connected.

Router 130 may be configured to establish a wireless or wired local network, such as a Wi-Fi network. Router 130 may facilitate information exchange between smart device 110 and terminal 120. Router 130 may be connected to smart device 110 and/or terminal 120 in a wireless or wired manner.

Terminal 120 may be an electronic device for receiving user input, such as a mobile phone, a tablet computer, a personal computer, a PDA, a remote controller, a medical device, exercise equipment, an ebook reader, a MP3 (Moving Picture Experts Group Audio Layer III) player, a MP4 player, etc. Terminal 120 may be configured to form wireless or wired communications with other devices, including smart device 110, router 130, and cloud server 140. When terminal 120 is at the same location as smart device 110 and router 130, terminal 120 may join the local network established by router 130 and communicate with smart device 110 via the local network. When terminal 120 is at a place distant from smart device 110 and router 130, terminal 120 may connect to the Internet via another local network (not shown) or a cellular network (not shown), and then remotely access smart device 110.

Terminal 120 may include a user interface through which terminal 120 may receive input from a user and provide output information to the user. In some embodiments, the user interface may include input devices, such as a touchscreen, a keyboard, a mouse, and/or a tracker ball, so that the user may enter various commands and data. For example, the user may use the user interface to initiate an application for connecting smart device 110 to a Wi-Fi network, to pair smart device 110 with terminal 120, and to enter passwords associated with the connection and pairing. For another example, if smart device 110 is a pan-tilt-zoom (PTZ) camera, the user may control the PTZ movement of smart device 110 through the user interface. In some embodiments, the user interface may also include a screen for displaying information. For example, the screen may be a Liquid Crystal Display (LCD), an LED display, a plasma display, or any other type of display.

Cloud server 140 may be a general purpose computer, a mainframe computer, or any combination of these components. Cloud server 140 may be implemented as a server, a server cluster consisting of a plurality of servers, or a cloud computing service center. Cloud server 140 may be operated by a third party service provider, or a manufacturer or a seller of smart device 110. Router 130 and cloud server 140 may be connected to each other through a wired or wireless network. Smart device 110 and terminal 120 may communicate with cloud server 140 via router 130. Terminal 120 may also communicate with cloud server 140 via other networks, without using router 130.

System 100 may include multiple cloud servers 140 for performing various functions consistent with the present disclosure. For example, as described in more detail below, system 100 may include a first cloud server 140 configured to select, based on the identity information of smart device 110, a suitable method for pairing smart device 110 with terminal 120. System 100 may also include a second cloud server 140 configured to perform some or all steps of the selected pairing method. System 100 may further include a third cloud server 140 configured to facilitate communication between smart device 110 and terminal 120 after the pairing is established.

In practice, many device-pairing methods may be used to pair two devices. However, not all the methods are compatible with the hardware and software specifications of smart device 110 and terminal 120. For example, some device-pairing methods require smart device 110 to scan a graphic code, e.g., a quick response (QR) code. Thus, these methods do not work for smart devices 110 that cannot scan or decipher the graphic code.

Moreover, for a particular pair of smart device 110 and terminal 120, not all pairing methods have the same performance or success rate. For example, some device-pairing methods require terminal 120 to send pairing information to smart device 110 via Wi-Fi signals. However, if smart device 110 does not support direct Wi-Fi connection with terminal 120 or cannot act as an access point itself, terminal 120 needs to first send the pairing information to a router. The router then dispatches the pairing information to other devices, including smart device 110, which are connected to the local Wi-Fi network established by the router. However, if the dispatching functions of the router are disabled, the pairing information cannot be successfully delivered to smart device 110. Thus, these device-pairing methods may have low success rates under unstable Wi-Fi environments. Accordingly, it is desirable for terminal 120 to learn the device information of smart device 110 and make an informed decision to select an optimal device-pairing method for pairing terminal 120 with smart device 110.

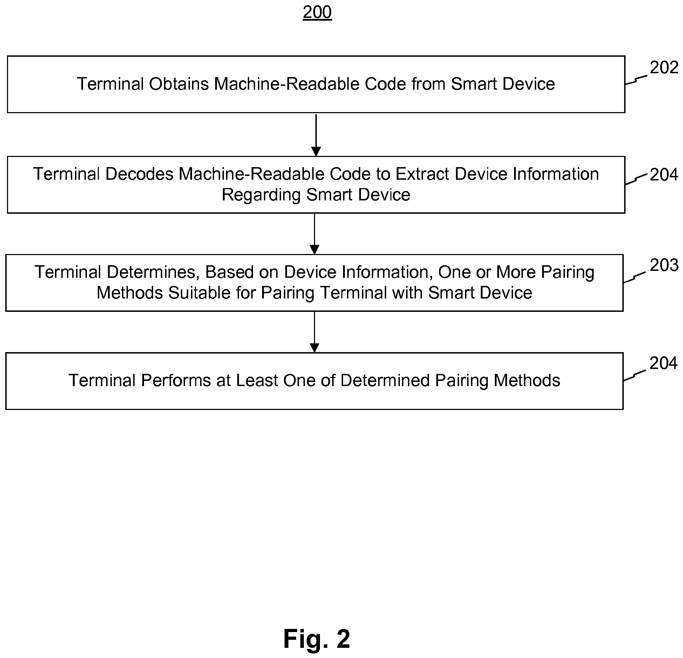

Fig. 2 is a flowchart of an exemplary device-pairing method. In one embodiment, method 200 may be performed in terminal 120. For example, if smart device 110 is an IP camera, a user may install in terminal 120 an application for viewing the videos captured by the smart device 110. Before terminal 120 is used to view the videos for the first time, the user may run the application to pair terminal 120 with smart device 100, so as to establish a secure communication channel with smart device 110.

Referring to Fig. 2, method 200 may include the following steps 202-208. In step 202, terminal 120 obtains a machine-readable code from smart device 110. In exemplary embodiments, the code may be carried and/or generated by smart device 110 in various forms. In one embodiment, the code is a graphic code printed on the case or manual of smart device 110. For example, the graphic code may be a one-dimensional bar code, a two-dimensional bar code, a two-dimensional quick response (QR) code, a three-dimensional code, an augmented reality code, etc.

In another embodiment, the machine-readable code is an audio signal recognizable by terminal 120. For example, the user may push a button on smart device 110 to generate the audio signal. Terminal 120 may then receive the audio signal via a microphone.

In yet another embodiment, the machine-readable code may be stored in a near-field communication (NFC) module of smart device 110. Correspondingly, terminal 120 may contain an NFC reader. When the user place terminal 120 in close proximity to smart device 110, terminal 110 may read the code via the NFC reader.

In step 202, terminal 120 decodes the machine-readable code to extract device information regarding smart device 110. The device information includes any type of information that enables terminal 120 to determine a suitable method for pairing terminal 120 with smart device 110. In one embodiment, the device information may include one or more pairing methods recommended by the manufacturer of smart device 110. In another embodiment, the device information may include identification information of smart device 110, such as a serial number, a machine access control (MAC) address, a model number, and/or a version number of smart device 110.

The device information may be converted into the machine-readable code by the manufacturer of smart device 110. In one embodiment, the code may also be encrypted to prevent an unauthorized device from deciphering the code. After obtaining the code, terminal 120 may decode and/or decrypt the code to extract the device information.

In step 206, terminal 120 determines, based on the device information, one or more pairing methods suitable for pairing terminal 120 with smart device 110. When the device information indicates the pairing methods recommended by the manufacturer of smart device 110, terminal 120 may determine the recommended pairing methods as the methods suitable for pairing terminal 120 with smart device 110. The recommended pairing methods are predetermined by the manufacturer based on the hardware and software specifications of smart device 110, and thus are compatible with smart device 110 and have high success rates.

For example, the manufacturer may use a plurality of preset codes to indicate the recommended pairing methods. If the device information includes the code "R001," terminal 120 may determine that the recommended pairing method is for terminal 120 to display the pairing information as a QR code, which can be scanned and deciphered by smart device 110. Similarly, if the device information includes the code "R003," this indicates that the recommended pairing method is to form a peer-to-peer (P2P) connection between smart device 110 and terminal 120. Moreover, if the device information includes the code "R001R003," terminal 120 may determine that both the QR code and the P2P connect are the recommended pairing methods.

When the device information includes the identity information of smart device 110, terminal 120 may determine the suitable pairing methods in various ways. In one embodiment, terminal 120 may pre-store a database that includes corresponding relationships between the identification information and one or more features of the smart device identified by the identification information. The features may include the smart device's hardware specifications, software specifications, geographic location, release date, etc. Terminal 120 may query the database to determine the features associated with the identification information and determine one or more pairing methods that are compatible with the features.

For example, the device information may include the model number of smart device 110. Terminal 120 may query the database to determine the hardware and software specifications associated with the model number. If the specifications indicate that smart device 110 is capable of scanning and deciphering a QR code, terminal 120 may select QR code as a suitable method for delivering the pairing information to smart device 110.

For another example, smart devices 110 marketed in different geographic locations and/or released at different dates may differ in the functions and services they provide. Table 1 shows an example how smart devices 110 may vary based on the geographic regions where they are sold and the years when they were released.

**Table 1**

| Geographic Region | Year of Release | Supported Pairing Methods |
|---|---|---|
| A | 2015 | Wi-Fi Signals, QR Code |
| | 2014 | Wi-Fi Signals, Audio Signals |
| B | 2015 | P2P, QR Code |
| | 2014 | P2P |

As illustrated by Table 1, smart devices 110 marketed in Region A before year 2015 support Wi-Fi and audio recognition but cannot recognize QR code. Moreover, smart devices 110 marketed in Region B have always supported P2P connections but were newly supplied with the QR-code recognition function in 2015. Accordingly, if the device information indicates that smart device 110 was originally marketed in Region A and released in 2014, terminal 120 may determine that QR code is not a suitable pairing method, even if delivering the pairing information through QR code may be more reliable and efficient than Wi-Fi and audio signals. Moreover, if the device information indicates that smart device 110 was originally sold in Region B and released in 2015, terminal 120 may determine that both QR code and P2P connection are suitable pairing methods.

In some embodiments, the above-described process for determining the suitable pairing methods may also be performed by cloud server 140. Specifically, terminal 120 may transmit the identification information of smart device 110 to cloud server 140. Cloud server 140 may query a database to determine one or more features of smart device 110 based on the identification information, and select one or more suitable pairing methods based on compatibility with the device features. Cloud server 140 may then return the selected pairing methods to terminal 120.

In one embodiment, the manufacturer may modify the recommended pairing methods based on testing results and/or user feedback, and save in cloud server 140 the recommended pairing methods for each model or version of smart devices 110. Cloud server 140 may determine, based on the identification information, the recommended pairing methods for smart device 110 and return the recommended pairing methods to terminal 120.

In one embodiment, cloud server 140 may also store and continuously update statistical information regarding the success rates of different pairing methods as applied to certain models or versions of smart devices 110. Such statistical information may be collected based on user feedback. Cloud server 140 may select the suitable pairing methods based on the success rates. For example, cloud server 140 may select the pairing methods whose success rates are higher than a predetermined threshold, e.g., 80%. For another example, cloud server 140 may select the pairing method with the highest success rate.

In step 208, terminal 120 performs at least one of the determined pairing methods. In one embodiment, terminal 120 may automatically perform the determined pairing methods. If terminal 120 determines there are multiple suitable pairing methods, terminal 120 may perform the pairing methods according to a specified order. For example, terminal 120 may first perform the pairing method with the highest success rate. If terminal 120 is successfully paired with smart device 110, method 200 ends. Otherwise, terminal 120 may proceed to perform other suitable pairing methods.

In one embodiment, terminal 120 may present the determined pairing methods in the user interface of terminal 120. For example, terminal 120 may display the pairing methods in a screen. The user may select a pairing method for terminal 120 to perform. After receiving the user input, terminal 120 may perform the selected pairing method.

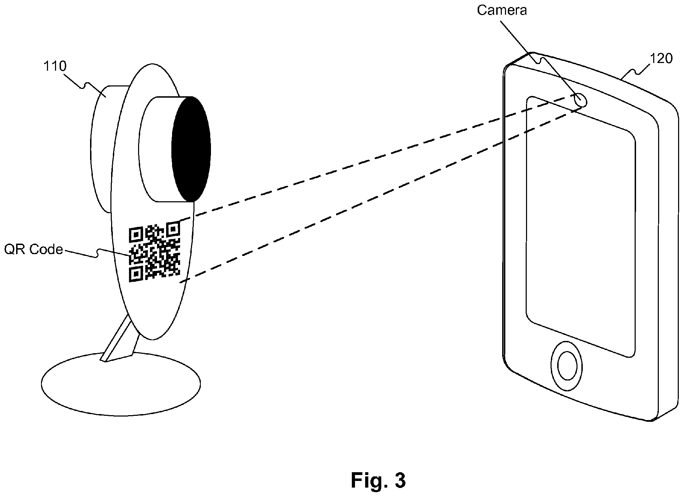

Fig. 3 is a schematic diagram illustrating an implementation of method 200, according to an exemplary embodiment. Referring to Fig. 3, the machine-readable code is a QR code printed on the case of smart device 110. The QR code encodes the identification information of smart device 110, such as a serial number assigned by the manufacturer of smart device 110. Terminal 120 may include a camera capable of capturing an image of the QR code. Terminal 120 may decode the QR code to extract the serial number of smart device 110. Terminal 120 may then query a local database or cloud server 140 to determine the hardware and/or software specifications of smart device 110 based on the serial number. Terminal 120 and/or cloud server 140 may further determine one or more pairing methods that are not only compatible with the hardware/software capabilities of smart device 110 but also have high success rates. Terminal 120 may then automatically perform at least one of the determined pairing methods or recommend the determined pairing methods to a user.

Method 200 enables terminal 120 to quickly learn the device information of smart device 110 and intelligently choose the suitable pairing method based on the device information. This way, method 200 improves the success rate of pairing and thus the user experience.

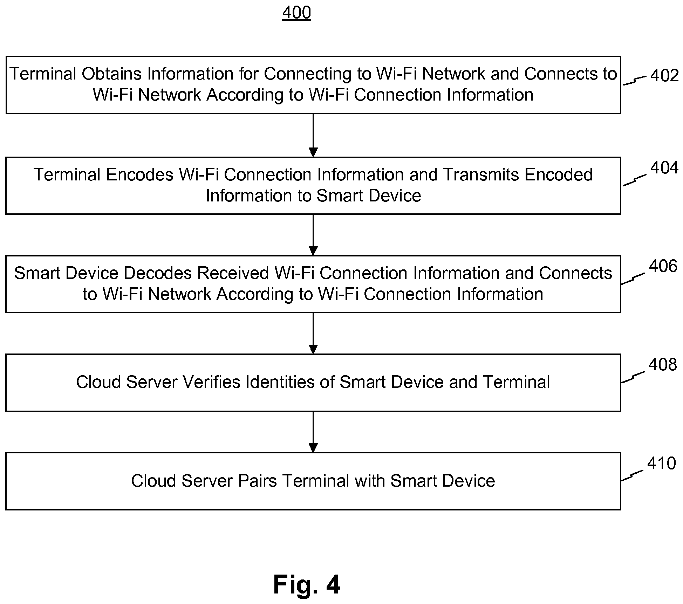

Fig. 4 is a flowchart of a method 400 for pairing a terminal with a smart device, according to an exemplary embodiment. For example, method 400 may be used in system 100. Referring to Fig. 4, method 400 may include the following steps 402-410.

In step 402, terminal 120 obtains information for connecting to a Wi-Fi network and connects to the Wi-Fi network according to the information. The Wi-Fi connection information may include a service set identifier (SSID) and a password. The user interface of terminal 120 allows a user to enter various commands and data for connecting to the Wi-Fi network. For example, terminal 120 may be a mobile phone, which may have a keyboard or a touch screen by which a user can enter a password of the Wi-Fi network.

In step 404, terminal 120 encodes the Wi-Fi connection information and transmits the encoded information to smart device 110. Terminal 120 may transmit the encoded information to smart device 110 in various manners, such as via audio signals, light signals, radio signals (e.g., Wi-Fi signals, Bluetooth signals, and NFC communication), etc.

In step 406, smart device 110 decodes the received Wi-Fi connection information and connects to the Wi-Fi network according to the Wi-Fi connection information. Depending on the manner in which the Wi-Fi connection information is encoded and transmitted, smart device 110 may execute a corresponding decoding method to extract the SSID and password of the Wi-Fi network from the received information. Smart device 110 may then connect to the Wi-Fi network according to the SSID and password.

In step 408, cloud server 140 verifies the identities of smart device 110 and terminal 120. Smart device 110 and/or terminal 120 may send one or more unique identifiers (UIDs) and passwords to cloud sever 140. These UIDs and passwords are associated with smart device 110 and/or terminal 120. Cloud server 140 may query a database to determine whether the received UIDs and passwords match predetermined information. If the matching is successful, cloud server 140 verifies the identities of smart device 110 and terminal 120 for pairing purpose. Otherwise, cloud server 140 refuses to pair terminal 120 with smart device 110.

In step 410, cloud server 140 pairs terminal 120 with smart device 110. Cloud server 140 may pair an identification of smart device 110 and an identification of terminal 120. The identification of smart device 110 may be, for example, a MAC address of a Bluetooth module in smart device 110. The identification of the terminal 120 may be, for example, a MAC address of a Bluetooth module or an International Mobile Equipment Identity (IMEI) code of terminal 120. Once the pairing is established, cloud server 140 may facilitate information exchange between smart device 110 and terminal 120.

Method 400 is suitable for a smart device 110 that can directly receive and recognize signals from terminal 120 before communication is formally established between terminal 120 and smart device 110. For example, if in step 404 terminal 120 transmits the Wi-Fi connection information via audio signals, smart device 110 needs to have audio recognition capabilities. Method 400 is also suitable for a smart device 110 that has no user interface or only has limited capabilities for user-machine interactions. For example, a smart camera may only be equipped with signal lights and/or a speaker configured to indicate the operating status of the smart camera, but may have no keyboard, touch pad, or touch screen for a user to enter a command. However, terminal 120 may acquire the Wi-Fi connection information and user commands through a user interface of terminal 120. By enabling terminal 120 to send the acquired information to smart device 110, method 400 provides a convenient solution to establish communication between smart device 110 and terminal 120. Thus, the user experience may be improved.

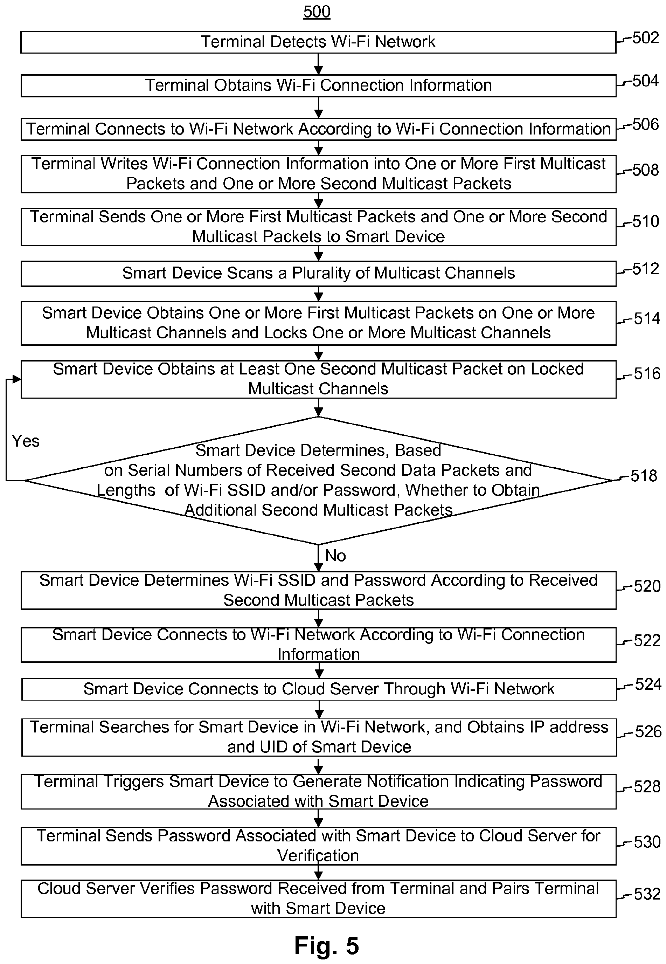

Fig. 5 is a flowchart of a method 500 for pairing a terminal with a smart device, according to an exemplary embodiment. For example, method 500 may be used in system 100. In particular, smart device 110 and terminal 120 may have IP multicast functions. Referring to Fig. 5, method 500 may include the following steps 502-532.

In step 502, terminal 120 detects a Wi-Fi network. The Wi-Fi network may be established by router 130. In exemplary embodiments, terminal 120 may search for available Wi-Fi networks in the vicinity of terminal 120 and generate a Wi-Fi network list including one or more Wi-Fi networks provided by one or more routers. If multiple Wi-Fi networks are detected, terminal 120 may allow a user to select a network/router for connection. Terminal 120 may be configured to periodically scan the vicinity for the available Wi-Fi networks. Alternatively, terminal 120 may be installed with an application for establishing communication with smart device 110. After a user starts the application, terminal 120 may be instructed by the application to scan the vicinity for any available Wi-Fi networks.

In step 504, terminal 120 obtains information for connecting to the Wi-Fi network. The Wi-Fi connection information may include a SSID and a password. The SSID may be broadcast by router 130. Thus, terminal 120 may automatically detect the SSID. However, if the broadcast function of router 130 is disabled, terminal 120 may prompt the user to manually enter the SSID through the user interface of terminal 120. Moreover, the network password may be entered by the user through the user interface of terminal 120. Alternatively, the network password may be prestored in terminal 120.

In step 506, terminal 120 connects to the Wi-Fi network according to the Wi-Fi connection information. Terminal 120 may send a certification request carrying the SSID and password to router 130. If router 130 successfully verifies the SSID and password. Router 130 may record terminal 120 and return an authorization response to terminal 110. After receiving the authorization response, terminal 120 may send a request to router 130 to establish a connection, and router 130 may enable terminal 120 to access the Wi-Fi network based on the request.

In step 508, terminal 120 writes the Wi-Fi connection information into one or more first multicast packets and one or more second multicast packets. The one or more first multicast packets are multicast datagrams including at least information about the identification of terminal 120 and lengths of the Wi-Fi SSID and password. The one or more second multicast packets are multicast datagrams including at least the Wi-Fi SSID and password. Terminal 120 may encrypt the information carried by the first and second multicast packets using any method known in the art. Details of generating the first and second multicast packets are described below.

Each multicast packet may use a multicast IP address to identify the packet as a multicast packet. A mapping relationship exists between multicast IP addresses and multicast MAC addresses. The rule of mapping follows Internet Protocol Version 4 (IPv4) or IPv6. The following description assumes the multicast addresses are IPv4 addresses. However, it will be readily apparent to those skilled in the art that the principles of the present disclosure may be applied to IPv6 address. Under IPv4, a multicast IP address may contain 4 bytes (32 bits), and a multicast MAC address may contain 6 bytes (48 bits). The higher 25 bits of a multicast MAC address are fixed by the Institute of Electrical and Electronic Engineers (IEEE), while the lower 23 bits (i.e., lower 3 bytes) of the multicast MAC address are editable. The lower 23 bits of a multicast IP address can be mapped into the lower 23 bits (i.e., lower 3 bytes) of a corresponding multicast MAC address. By changing the multicast IP address, terminal 120 may write the Wi-Fi connection information in the 3 lower bytes of the multicast MAC address, which is contained in the header of a multicast packet. After sniffing the multicast packet, smart device 110 may read the multicast MAC address and determine the Wi-Fi connection information.

In exemplary embodiments, terminal 120 may use each of the lower 3 bytes in a multicast MAC address to carry different types of information. For example, terminal 120 may use a first byte for a serial number of the multicast packet, a second byte for an identification of terminal 120, and a third byte for a part of the Wi-Fi connection information.

Terminal 120 may write an identification of terminal 120 in the first multicast packets. The identification of terminal 120 may be a preset UID associated with terminal 120. The identification may be used by smart device 110 to determine whether a multicast packet is originated from terminal 120. For example, the identification may be a MAC address of terminal 120. Also, for example, the identification may be a code preset by a manufacturer of smart device 110. Yet for another example, the identification may be a random synchronous code generated by terminal 120, configured to initiate synchronization between smart device 110 and terminal 120. Similarly, each second multicast packet may also include the identification of terminal 120.

Terminal 120 may also write lengths of the Wi-Fi SSID and password in the first multicast packets. "Length" refers to the number of bytes. For example, if the password is 1234, then the length of the password is 4.

In some embodiments, terminal 120 may use reserved serial numbers for the first multicast packets, to distinguish them from the second multicast packets and to indicate the type of information carried by each first multicast packet. For example, a first multicast packet with serial number 0 may indicate that the packet carries information about the length of the Wi-Fi password.

Terminal 120 may write at least one byte of the Wi-Fi SSID or password in each second multicast packet. For example, if the Wi-Fi password is 30 bytes long, terminal 120 may generate 30 second multicast packets for carrying the password. Terminal 120 may also insert a serial number into each second multicast packet. Each serial number corresponds to one byte of Wi-Fi SSID or password. In the above example, the nth second multicast packet carries the nth byte of the Wi-Fi password.

In step 510, terminal 120 sends the one or more first multicast packets and the one or more second multicast packets to smart device 120.

In step 512, smart device 110 scans a plurality of multicast channels. To improve the scanning efficiency, smart device 100 may divide all the available multicast channels into at least two groups. The first group of channels is historically used more frequently than the second group of channels. Smart device 110 may first scan the first group of channels. If no multicast packets are detected on the first group of channels, smart device 110 may continue to scan the second group of channels. Smart device 110 may scan each group of channels multiple times to ensure scanning accuracy. For example, the multicast channels 1, 6, and 11 may be more frequently used than other channels. Thus, smart device 110 may first scan these three channels for one or more times. If no multicast packets are detected on the three channels, smart device 110 may continue to scan the rest of multicast channels.

In step 514, smart device 110 obtains the one or more first multicast packets on one or more multicast channels and locks the one or more multicast channels. Smart device 110 may decode and decrypt the information carried by a multicast packet using methods consistent with the methods employed by terminal 120 to generate the multicast packet. If the identification of terminal contained in the first multicast packets matches the identification of terminal 120, smart device 110 locks the channels on which the first multicast packets are received. For example, after receiving on channel 6 a first multicast packet containing identification matching the identification of terminal 120, smart device 110 may lock channel 6.

In step 516, smart device 110 obtains at least one second multicast packet on the locked multicast channels. Smart device 120 may choose to receive only the multicast packets labeled with the identification of terminal 120. Smart device 110 may extract the serial number, identification of terminal, and the Wi-Fi SSID or password information carried by the second multicast packets.

In step 518, smart device 110 determines, based on the serial numbers of the received second multicast packets and the lengths of the Wi-Fi SSID and/or password, whether to obtain additional second multicast packets. For example, if a second multicast packet carries one byte of Wi-Fi SSID or password and the combined length of the SSID and password is 50 bytes long, smart device 110 needs to obtain at least 50 second multicast packets to determine the SSID and password. When smart device 110 has only received the first 45 second multicast packets, smart device 110 may determine that 5 more second multicast packets are needed. In contrast, after receiving 50 second multicast packets, smart device 110 may determine that no more second multicast packets are needed. If additional second multicast packets are needed to determine the Wi-Fi SSID and/or password, smart device 110 returns to step 516. Otherwise, smart device 110 proceeds to step 520.

In step 520, smart device 110 determines the Wi-Fi SSID and password according to the received second multicast packets. Smart device 110 may arrange the byte(s) of Wi-Fi connection information carried by each second multicast packet in an order consistent with the corresponding serial number to assemble the correct Wi-Fi SSID and password.

In step 522, smart device 110 connects to the Wi-Fi network according to the Wi-Fi SSID and password. This step is similar to step 506.

In step 524, smart device 110 connects to cloud server 140 through the Wi-Fi network. In one embodiment, smart device 110 may report a password associated with smart device 110 to cloud server. Such password may be preset by the manufacturer of smart device 110. In another embodiment, cloud server 140 may assign a password to smart device 110.

In step 526, terminal 120 searches for smart device 110 in the Wi-Fi network, and acquires an IP address and a UID of smart device 110. In one embodiment, the UID may be a MAC address of smart device 110. Terminal 120 may use the UID to query cloud server 140 as to whether terminal 120 has been paired with smart device 110. If no pairing has been formed, terminal 120 may prompt the user to pair terminal 120 with smart device 110.

In step 528, terminal 120 triggers smart device 110 to generate a notification indicating the password associated with smart device 110. For example, if the user instructs terminal 120 to pair terminal 120 with smart device 110, terminal 120 may use the IP address of smart device 110 to run a common gateway (CGI) script on smart device 110 to trigger the broadcasting of the password by smart device 110 in a voice form.

In step 530, terminal 120 sends the password associated with smart device 110 to cloud server 140 for verification. After hearing the password, the user may enter the password in terminal 120, which then passes the password to cloud server 140 for verification.

In step 532, cloud server 140 verifies the password received from terminal 120 and pairs terminal 120 with smart device 110. This step is similar to steps 408 and 410 shown in Fig. 4. After the pairing is established, cloud server 140 may instruct smart device 110 to stop the notification of the password, e.g., stop broadcasting the password.

By using IP multicast, method 500 enables smart device 110 to obtain the Wi-Fi connection information and to further connect to the Wi-Fi network. Moreover, method 500 does not require a wired connection for smart device 110 and is largely automated, and thus provides a fast and convenient solution to pair terminal 120 with a smart device 110 that has IP multicast functions. Further, method 500 does not require a user to directly operate on smart device 110, and thus is particularly suitable for smart devices that have no user interface or only have limited capabilities for user-machine interaction.

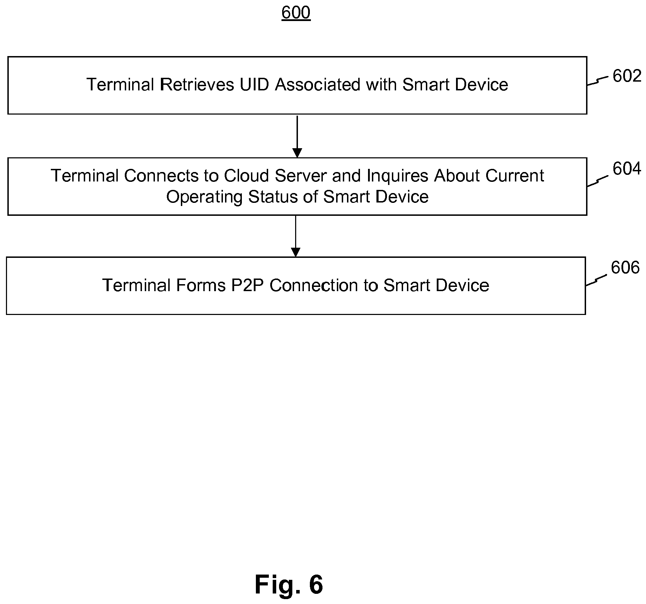

When smart device 110 supports P2P connections, terminal 120 may also pair and communicate with smart device 110 via P2P connections. Fig. 6 is a flowchart of a method 600 for pairing a terminal with a smart device, according to an exemplary embodiment. For example, method 600 may be used in system 100. In particular, cloud server 140 may be configured as a P2P server to facilitate the forming of a P2P connection between smart device 110 and terminal 120. Referring to Fig. 6, method 600 may include the following steps 602-610.

In step 602, terminal 120 retrieves a UID associated with smart device 110. In one embodiment, the UID may be encoded in the machine-readable code. Thus, terminal 120 may obtain the UID in step 204 (Fig. 2). In another embodiment, terminal 120 may obtain the UID from cloud server 140. For example, terminal 120 may send the device information of smart device 110, including serial number, MAC address, IP address, and/or geographic location, to cloud server 140. Cloud server 140 may then verify, based on the device information, whether smart device 110 is an authorized device. If smart device 110 is verified, cloud server 140 may assign a UID to smart device 110 and return the UID to terminal 120 and/or smart device 110.

In step 604, terminal 120 connects to cloud server 140 and inquires about a current operating status of smart device 110. After connecting to cloud server 140, terminal 120 may send the UID associated with smart device 110 to cloud 140 for status verification. Cloud server 140 may detect whether smart device 110 is connected to a network. Cloud server may also determine whether smart device 110 is operating normally and available for make a connection with terminal 120. If smart device 110 is available, terminal 120 may proceed to step 606. Otherwise, terminal 120 may end method 600.

In step 606, terminal 120 forms a P2P connection to smart device 110. The P2P connection is formed with the assistance from a P2P server, which may be different from cloud server 140. For example, the P2P server may first attempt to use "hole-punching" technology to establish the P2P connection. Generally, hole punching is a technique in computer networking for establishing a direct connection between two parties in which one or both are behind firewalls or behind routers that use network address translation (NAT). In the hole-punching process, the P2P server may reply to terminal 120 with a message containing the public and private endpoints (i.e., the pair of IP address and port number) of smart camera 110. Meanwhile, the P2P server may send to smart camera 110 a connection request message containing the public and private endpoints of terminal 120. Afterwards, smart camera 110 and terminal 120 may send data packets to each other at the respective endpoints.

If the hole-punching process is successful, the P2P connection is formed, and terminal 120 may communicate with smart device 110 via the P2P connection. If the hole-punching process fails, the P2P server may instead work as a transit point to relay information between smart camera 110 and terminal 120.

Method 600 is suitable for a smart device 110 that is enabled with P2P service. P2P technology simplifies the process of pairing terminal 120 with smart device 110. In particular, smart camera 110 can be automatically connected to terminal 120, with minimum input from the user. Therefore, the plug-and-play (PnP) of smart device 110 is realized and the user experience of smart device 110 is greatly improved.

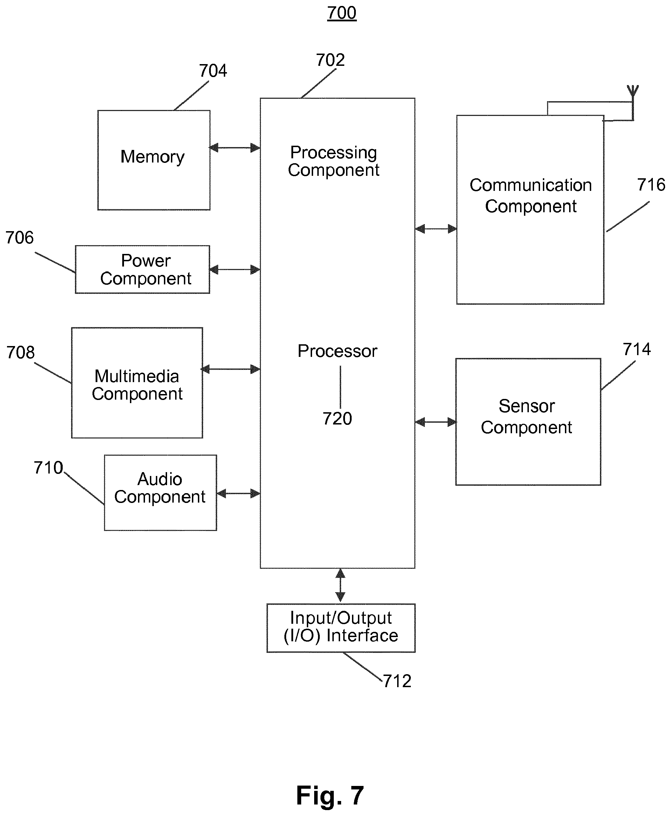

Fig. 7 is a block diagram of a device 700 for performing a device-pairing method, according to an exemplary embodiment. For example, device 700 may be implemented as smart device 110 or terminal 120. Referring to Fig. 7, device 700 may include one or more of the following components: a processing component 702, a memory 704, a power component 706, a multimedia component 708, an audio component 710, an input/output (I/O) interface 712, a sensor component 714, and a communication component 716.

Processing component 702 may be configured to control overall operations of device 700, such as the operations associated with display, telephone calls, data communications, camera operations, and recording operations. Processing component 702 may include one or more processors 720 to execute instructions to perform all or part of the steps in the above described methods. Moreover, processing component 702 may include one or more modules which facilitate the interaction between processing component 702 and other components. For instance, processing component 702 may include a multimedia module to facilitate the interaction between multimedia component 708 and processing component 702.

Memory 704 may be configured to store various types of data to support the operation of device 700. Examples of such data include instructions for any applications or methods operated on device 700, contact data, phonebook data, messages, pictures, video, etc. Memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, or a magnetic or optical disk.

Power component 706 may provide power to various components of device 700. Power component 706 may include a power management system, one or more power sources, and any other components associated with the generation, management, and distribution of operating power in device 700.

Multimedia component 708 may include a screen providing an output interface between device 700 and the user. In some embodiments, the screen may include an LCD and a touch panel (TP). If the screen includes a touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

In some embodiments, multimedia component 708 may include a front camera and/or a rear camera. The front camera and/or the rear camera may receive external multimedia data while device 700 is in an operation mode, such as a photographing mode or a video mode. Each of the front camera and the rear camera may be a fixed optical lens system or have focus and optical zoom capability.

Audio component 710 may be configured to output and/or input audio signals. For example, audio component 710 may include a microphone configured to receive an external audio signal when device 700 is in an operation mode, such as a call mode, a recording mode, and a voice recognition mode. The received audio signal may be further stored in memory 704 or transmitted via communication component 716. In some embodiments, audio component 710 may further include a speaker to output audio signals.

I/O interface 712 may provide an interface between processing component 702 and peripheral interface modules, such as a keyboard, a click wheel, buttons, and the like. The buttons may include, but are not limited to, a home button, a volume button, a starting button, and a locking button.

Sensor component 714 may include one or more sensors to provide status assessments of various aspects of device 700. For instance, sensor component 714 may detect an on/off status of device 700, relative positioning of components, e.g., the display and the keypad, of device 700, a change in position of device 700 or a component of device 700, a presence or absence of user contact with device 700, an orientation or an acceleration/deceleration of device 700, and a change in temperature of device 700. Sensor component 714 may include a proximity sensor configured to detect the presence of nearby objects without any physical contact. Sensor component 714 may also include a light sensor, such as a CMOS or CCD image sensor, for use in imaging applications. In some embodiments, sensor component 714 may also include a GPS receiver, an accelerometer, a gyroscope, a magnetic sensor, a pressure sensor, or a temperature sensor.

Communication component 716 may be configured to facilitate communication, wired or wirelessly, between the device 700 and other devices. Device 700 may access a wireless network based on one or more communication standard, such as Wi-Fi, LTE, 2G, 3G, 4G, 5G, etc. In one exemplary embodiment, communication component 716 may receive a broadcast signal or receive associated information from an external broadcast management system via a broadcast channel. In one exemplary embodiment, communication component 716 may further include an NFC module to facilitate short-range communications. In other embodiments, communication component 716 may be implemented based on a radio frequency identification (RFID) technology, an infrared data association (IrDA) technology, an ultra-wideband (UWB) technology, a Bluetooth technology, or other technologies.

In exemplary embodiments, device 700 may be implemented with one or more application-specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, programmed to perform the above-described methods.

In exemplary embodiments, there is also provided a non-transitory computer-readable storage medium including instructions, such as included in memory 704, executable by processor 720 in the device 700, for performing the above-described methods. For example, the non-transitory computer-readable storage medium may be a read-only memory (ROM), a random access memory (RAM), a CD-ROM, a magnetic tape, a memory chip (or integrated circuit), a hard disc, a floppy disc, an optical data storage device, or the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact constructions that are described above and illustrated in the accompanying drawings, and that various modifications and changes can be made without departing from the scope thereof. It is intended that the scope of the invention should only be limited by the appended claims.

## Claims

1. A method for a terminal to communicate with a device, the method comprising:
obtaining a machine-readable code from the device;
determining, based on the code, one or more pairing methods for pairing the terminal with the device; and
performing at least one of the pairing methods.

2. The method of claim 1, wherein obtaining the code comprises at least one of:
scanning a graphic code displayed on the device,
preferably wherein the graphic code includes at least one of a bar code, a quick response code, a three-dimensional code, or an augmented reality code;
receiving an audio signal generated by the device; or
receiving the code through near-field communication.

3. The method of claim 1 or claim 2, wherein determining the pairing methods comprises:
decoding the machine-readable code; and
obtaining a recommendation for one or more of the pairing methods.

4. The method of claim 1 or claim 2, wherein determining the pairing methods comprises:
decoding the machine-readable code;
obtaining identification information of the device,
preferably wherein the identification information includes at least one of a serial number, a machine access control address, a model number, or a version number of the device; and
selecting one or more of the pairing methods based on the identification information.

5. The method of claim 4, wherein selecting one or more of the pairing methods comprises:
querying a database to determine features of the device based on the identification information; and
selecting one or more of the pairing methods based on compatibility with the device features.

6. The method of claim 4, wherein selecting one or more of the pairing methods comprises:
transmitting the identification information to a server; and
receiving, from the server, identification of one or more of the pairing methods based on compatibility with the device features and/or based on success rates of the pairing methods as applied to the device.

7. The method of any of claims 1 to 6, wherein performing at least one of the pairing methods comprises:
presenting one or more of the pairing methods to a user of the terminal;
receiving, from the user, a selection of a first pairing method; and
in response to the user input, performing the first pairing method.

8. The method of any of claims 1 to 6, wherein:
the pairing methods include at least a first pairing and a second pairing method; and
performing at least one of the pairing methods comprises:
performing the first pairing method, and
after determining that the first pairing method has failed, performing the second pairing method.

9. A terminal, comprising:
a memory storing instructions; and
a processor configured to execute the instructions to perform the method of any claims 1 to 8.

10. A method performed by a server, the method comprising:
receiving, from a terminal, a request to recommend a pairing method for pairing the terminal with a device, the request comprising identification information of the device;
selecting, based on the identification information, a pairing method that is compatible with the device; and
transmitting the selection, to the terminal, as a recommended pairing method.

11. The method of claim 10, wherein selecting a pairing method comprises:
querying a database to determine features of the device based on the identification information; and
selecting a pairing method that is compatible with the features of the device.

12. The method of claim 10 or claim 11, wherein:
the server stores success rates of a plurality of pairing methods used on the device; and
selecting the pairing method comprises:
selecting the pairing method based on the success rates.

13. A method performed by a device carrying a machine-readable code, the method comprising:
receiving from a terminal a command for pairing with the terminal, the command being based on the code and specifying a pairing method; and
performing pairing steps according to the received method.

14. A computer-readable storage medium storing instructions that:
when executed by a processor of a terminal, cause the terminal to perform the method of any of claims 1 to 8,
when executed by a processor of a server, cause the server to perform the method of any of claims 10 to 12, or
when executed by a processor of a device carrying a machine-readable code, cause the device to perform the method of claim 13.

15. A system, comprising:
a device carrying a machine-readable code; and
a terminal, comprising:
a memory storing instructions; and
a processor configured to execute the instructions to cause the terminal to perform the method of any of claims 1 to 8.
